# EUROPEAN PATENT SPECIFICATION

(11) **EP 3 816 106 B1**
(45) Date of publication and mention of the grant of the patent: **18.03.2026**
(21) Application number: 18924058.3
(22) Date of filing: 28.06.2018
(51) Int. Cl.: C01B 33/12, C08H 7/00, C08H 8/00, C12P 19/02, C08B 1/00, C08K 3/013, C08K 3/36, B09B 3/00

(54) **METHOD FOR PRODUCING SILICON DIOXIDE**
VERFAHREN ZUR HERSTELLUNG VON SILIZIUMDIOXID
PROCÉDÉ DE PRODUCTION DE DIOXYDE DE SILICIUM

(43) Date of publication of application: 05.05.2021
(73) Proprietor: Koukishev, Evgueniy Anatolievich, Moscow, 125368 (RU); Chernyavskaya, Nina Andreevna, Moscow, 117574 (RU)
(72) Inventor: CHERNYAVSKAYA, Nina Andreevna, Moscow, 117574 (RU)
(74) Representative: Gallo, Luca
(86) International application number: PCT/RU2018/000427
(87) International publication number: WO 2020/005091

(56) References cited:
- EP-A1- 2 265 625
- WO-A1-2009/116885
- US-A1- 2010 061 910
- US-A1- 2011 312 055
- US-B2- 7 270 794
- US-B2- 8 178 067
- CONCHA REAL ET AL: "Preparation of Silica from Rice Husks", JOURNAL OF THE AMERICAN CERAMIC SOCIETY, vol. 79, no. 8, 1 August 1996 (1996-08-01), pages 2012 - 2016, XP055016423, ISSN: 0002-7820, DOI: 10.1111/j.1151-2916.1996.tb08931.x
- PATEL M. ET AL: "Effect of thermal and chemical treatments on carbon and silica contents in rice husk", vol. 22, no. 7, 1 July 1987 (1987-07-01), Dordrecht, pages 2457 - 2464, XP055875711, ISSN: 0022-2461, Retrieved from the Internet <URL:https://link.springer.com/content/pdf/10.1007/BF01082130.pdf> DOI: 10.1007/BF01082130

## Description

The invention relates to the technique of deep conversion of agricultural waste, waste of municipal facilities and other types of waste (sawdust, wheat straw, paddy straw etc., rice husk and sunflower husk, bagasse of fast-growing grass, residual sludge of the urban treatment facilities etc.), namely, to the field of conversion of cellulose-containing materials in order to extract silicone dioxide and organic substances contained in such materials for subsequent use thereof in various technical fields. For example, in this case extracted silicon dioxide can be used in the tire industry (as a filler), the production of industrial rubber goods and plastics, chemical and food industry, machine-building industry, electronics and electrical engineering industry.

### Background of the invention

Rice husk is used as the most common vegetable source raw material for producing silicon dioxide. In this case, two different techniques are used - without pretreatment of source material (rice husk) and with pretreatment.

Methods for producing silicon dioxide without the pretreatment of source raw material involve simple roasting of rice husk at high temperatures. Examples for this method are the Patent of Germany No. 2416291, Cl. C04 B and British Patent No. 150 8825, Int.Cl C01B 33/12, where rice husk is roasted with the roasting temperature varying in the range of 200°C - 900°C. The main disadvantages of such a method for producing silicon dioxide are the fact that the produced product has a low degree of purity and the fact that up to 80% and more of the mass of husk are discharged into the atmosphere in the form of gases.

The second type of technique uses pretreatment of a source raw material before the stage of roasting with dilute solutions mineral or organic acids, water wash and, afterwards, stepped annealing of the residue in the temperature range of 300°C - 1100°C (US Patent 7998448 B2 and US Patent 118 9403688 B1). However, when it is used the mass of waste is large (at the pretreatment step lignin is not removed, and only partially cellulose and hemicellulose are removed) and one kind of product, silicon dioxide, being in an amorphous phase is produced.

Thus, though preliminary preparation of the source raw material when producing silicon dioxide by the method of roasting yields better results compared to the methods that do not involve prepreparing the source raw material, however, it has two significant disadvantages. First, the processes are multistage and use large volumes of liquid and various facilities, which leads to high energy costs. Second, they do not allow to process and use all potentially possible useful related substances of cellulose-containing materials in an integrated fashion. Rice husk contains only about 15% - 20% of silicon dioxide (like many other cellulose-containing materials and waste), while in the existing techniques 80% - 85% of the remaining substances included in the material, namely cellulose, polysaccharides, lignin and a number of other valuable substances are lost irretrievably and destroyed.

The most effective is the method for producing silicon dioxide (US Patent 8178067 B2) from the waste of forest raw material, agricultural raw material or materials containing hexose and/or pentose and SiO₂, where acid hydrolysis of the source cellulose-containing material is performed in two steps using high pressure in order to produce silicon dioxide before the process of roasting (in the presence of mineral or organic acid). At the same time, it is possible to decrease the content of the components containing hexose and pentose in the source material up to 10 weight % and 20 weight % respectively. At the same time, the content of polyphenols (in particular, lignin) in the residue after the stage of hydrolysis reaches 40 weight %, which makes the process of roasting the residue difficult and expensive. The residue is annealed after hydrolysis at a temperature from 400°C to 1200°C.

Document WO 2009/116885 A1 discloses a method of acid hydrolysis of cellulose containing materials, which provides a higher yield of monosaccharides along with high quality separated lignin. The hydrolysis is carried out in the presence of chemical compounds that protect monosaccharides from the impact of high temperatures and pressure.

Document US 2011/312055 A1 discloses a solution relating to a process for the production of alcohol, especially ethanol or butanol, particularly ethanol, from cellulosic materials, in particular a process involving acid hydrolysis of cellulose. In particular the process for producing alcohol comprises: hydrolyzing said cellulosic material with an aqueous acid to produce a hydrolysate; extracting acid and water from **said hydrolysate** with a water-miscible organic extraction solvent to yield (a) a first aqueous acidic solution containing said extraction solvent and (b) a residue containing sugars; subjecting said residue to an oligosaccharide cleavage reaction to yield an aqueous solution of fermentable sugars; fermenting said fermentable sugars and distilling alcohol from the resulting fermented mixture; contacting said first aqueous acidic solution with a pressurized fluid lipophilic solvent in non-gaseous form, which fluid solvent is substantially water-immiscible and is gaseous at ambient conditions, to yield a second aqueous acid solution and a solvent mixture of said extraction solvent and said fluid solvent; depressurizing said solvent mixture to release said extraction solvent for recycling; and, optionally, concentrating said second aqueous acid solution for recycling.

### Summary of the invention

The purpose of the invention is to develop a method for producing silicon dioxide by burning a preprepared cellulose-containing material aimed at removal of its carbon part (maximum reduction) before the burning process. Another purpose of the invention is to develop such a method that would allow to extract from the source raw material other useful products, monosaccharides (hexose and pentose), as well as pure unsulphated lignin, in addition to producing silicon dioxide as a final target product.

These and other accompanying purposes, in particular, reduction of costs of raw material pretreatment and a decrease in the quantity of generated gas products during the step of roasting a pretreated raw material when producing silicon dioxide are achieved by the invention using raw material pretreatment technique including:
acid hydrolysis of raw material carried out in a single step with 3 treatments 5 minutes each under pH < 5, at a temperature of 140 °C - 240 °C and under high pressure in the presence of at least one protector of monosaccharides, protecting them from high temperatures and pressure, and
separation of lignin and monosaccharides from the reaction products,
wherein the reaction products enter the distiller, where the protectors are separated, then the residue is fed to the filter, where the lignin is separated, and then the monosaccharides in the form of an aqueous solution of sugars are collected after neutralizing.

Amorphous silicon dioxide is then extracted by burning the solid part of the hydrolysis residue at a temperature of 350 - 750°C in a zone furnace.

Before feeding the solid hydrolysis residue containing silicon dioxide to the zone furnace for burning, treating said solid hydrolysis residue with a solvent is carried out to remove the lignin residues to reduce the carbon content, and treating the hydrolysis residue with 1N solution of hydrochloric acid is carried out to reduce the total content of metal oxides.

In a preferable embodiment, the acid hydrolysis is carried out at a temperature of 170-190°C.

To increase the yield of monosaccharides as one of useful by-products in addition to silicon dioxide, it is advisable to perform hydrolysis in the presence of at least one of the protectors, which protect monosaccharides from high temperatures and pressure. Ketones or oxygen-containing heterocycles can be used as such protector.

It is also advisable to perform additionally subjecting the lignin (raw material) to alkaline pulping before hydrolysis in the event of high content of lignin in the source raw material.

It is advisable, but not necessary, to use rice husk as a source raw material.

If the raw material is pretreated in accordance with the invention, it becomes possible to extract to the fullest extent the carbon component in the form of industrially useful products (lignin, monosaccharides) from the main mass of the source raw material in an amount of up to 80% of the total mass. The hydrolysis (mineral) residue is about 20% of the source raw material and contains mainly silicon dioxide with impurities of metal oxides and insignificant residues of carbon.

The above characteristics and advantages of the invention will be more clear from the following detailed description of the invention, which is given in the embodiments of the invention, is not limiting and is provided by reference to the accompanying drawing.

### Brief description of the drawing

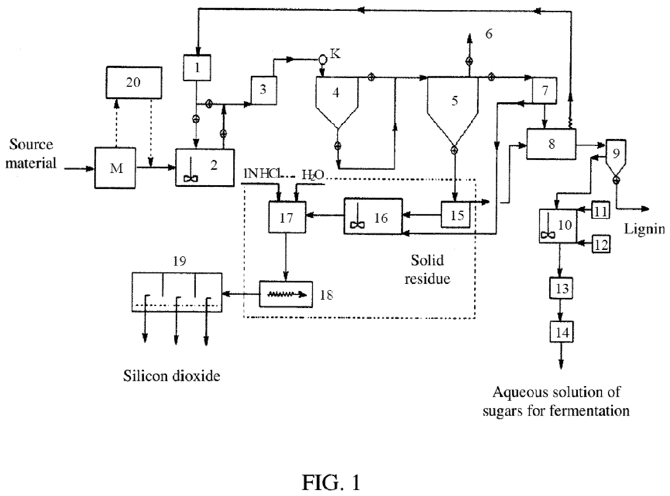

Fig. 1 is an embodiment of the flow diagram of realization of the method according to the invention.

### Detailed description of the invention

Referring now to Fig. 1, there is shown a flow diagram of realization of the method.

The source material is fed to "grinder" - dispenser M (or without preliminary grinding, just like in the case of, for example, using primary residual sludge of the treatment facilities). The solid material with particles with the size of 0.5 - 1.0 mm is fed to a mixer 2. The solution for hydrolysis (HS) is also fed to the mixer through the dispenser 1. The reaction mass is fed from the mixers 2 and 1 in sequence through the dispensing pump 3 and a check valve K to a reactor 4. The reactor 4 is provided with a heating jacket, temperature sensors, pressure sensors, a safety valve, a siphon connected to an upper valve (a throttle) to discharge the reaction products, a lower valve (a throttle) to discharge the reaction products, (as well as a valve to inject steam directly to the apparatus 4, if necessary, to heat the reaction mass quickly and to inject a portion of the necessary amount of water for a hydrolyzing solution or for preliminary steaming of the source raw material before treating with hydrolyzing solutions, if necessary), which are not shown on the diagram.

The reaction mass is heated and the reaction products are discharged from the reactor 4 through the valves (the throttles) of the apparatus 4 to a hydrocyclone 5, where they are quickly cooled and the volatile by-products are separated, which, in their turn, are discharged through the valve 6 from the cyclone 5 to an accumulator tank (not shown). Afterwards, through the filters 7 and 15, in which the solid components of the reaction mass are separated, the solution of the reaction products is fed to a distiller 8, where the protectors (or at least one) are separated. The protectors are returned to the gauging dispenser 1 for preparation of HS. The residue is fed to the filter (or the hydrocyclone) 9, where lignin is separated, and is fed afterwards to a "neutralizer" 10 provided with a pH-meter (11), a gauging dispenser for a neutralizing solution (12). The neutralized products (the aqueous solution of sugars) are collected through a filter 13 to a receiver tank 14 and subsequently sent to fermentation.

The solid residue from the filters 15 and 7 is sent to an accumulator tank 16, where (if necessary) it is treated with acetone to remove the residues of lignin, is treated with 1N solution of HC1 afterwards and washed with water in a filter 17. The solid residue is fed to a drier 18, and from the drier to a zonal kiln 19, where the zones **with certain** temperatures of burning the solid residue are determined depending on what quality of silicon dioxide is required to be produced for certain area of application. The produced silicon dioxide contains total carbon in an amount of < 0.02 weight %, which shows that carbon is exhaustively removed from the source cellulose-containing material in the form of useful related products.

For some cellulose-containing materials, where the quantity of lignin is sufficiently high, such raw material can be pretreated, for example, by "alkaline pulping" in a solution of dilute alkali, for example, in a 4% aqueous solution of NaOH. A pretreatment unit is added to the flow diagram in this case (diagram 1, reference numeral 20). The grinded product is fed through the dispenser M to the "boiling tank" (not shown) in this case, where it is treated with an alkaline solution (T = 95°C - 100°C; 2 hours) and the main part of lignin contained in the source substrate is boiled down. Afterwards, alkali is washed away from the solid substrate in the filter, and the solid substrate is fed to the process chain of diagram 1 through reference numeral 2, and the alkaline solution of lignin is sent to a settler (not shown), where lignin is set down. Alkali is returned to the process cycle, and the precipitation of lignin is removed from the process through a centrifuge (or a hydrocyclone).

The diagram allows to treat a dose of a source material with new portions of the hydrolyzing liquid multiple times. In this case, the reaction mix with a sample of cellulose-containing material in the first instance is fed from the mixer 2 through the dispensing pump to the reactor and, after curing, the liquid reaction products are discharged through the upper valve (the throttle) to the cyclone 5. In this case, the solid in-process sample remains in the autoclave. The fresh hydrolyzing liquid is fed from the mixer 1 by the dispensing pump 3, which switches (possibly, automatically) to this mixer. 2 withdrawals of the pure hydrolyzing solution from the mixer 1 take place per one withdrawal with a sample from the mixer 2. The valves for "discharging" the products also operate in sequence: one "discharge" through the lower valve (the throttle) takes place per 2 discharges through the upper valve (the throttle), a third treatment of the residues of the sample of the material takes place in this case.

The embodiments of the invention using various source materials (including **those based** on rice husk) and various protectors of monosaccharides are provided below. The overall results are given in Table 1.

### Example 1

Primary residual sludge of the urban treatment facilities with a humidity of 30% (100 g of dry source material) in the amount of 130 g was loaded into the reactor, which primary residual sludge was treated three times for 5 minutes each time at T = 180°C and pH = 1.87 with a hydrolyzing solution (HS), where the source solution/hydrolyzing solution ratio being 1:10 and the protector/water ratio in the hydrolyzing solution being 4:1 (protector - acetone). HS was injected through a check valve by a dispensing pump, and the reaction products were outputted through the upper and lower throttles of the autoclave to the hydrocyclones, as described above (Diagram 1).

The hydrolysis residue of source sludge was dried to constant weight (32 g) after filtering. The protector was removed from the combined hydrolyzing solutions by distillation in the waterjet pump vacuum after filtering. The precipitated lignin was separated by filtering. The laid-down lignin was washed off from the walls of the distillation flask and dried. The total yield of lignin was 28.6 g. The residue (the aqueous solution of sugars) was neutralized up to pH = 6.1 with "calcium milk" (CaO), the precipitate was filtered out. The concentration of sugars in the aqueous solution was determined according to the saccharimeter. The yield of sugars was 32.5 g. The volatile reaction products were collected to the accumulation tanks through the valves of the cyclones. Their approximate content was 6.9 g (table 1, item 1).

The hydrolysis residue containing silicon dioxide is treated with acetone to dissolve the remaining traces of lignin, which remained in the solid residue after filtering. In this case, the content of total carbon is reduced approximately by 3.5 weight %. After washing the residue of 1N with a solution of HC1, the total content of metal oxides is reduced up to 0.80 weight %. Subsequently, after drying in the air, the residue is submitted to the zonal kiln. Annealing the residue at T = 600°C leads to producing silicon dioxide with the content of total carbon < 0.02 weight %. The yield of amorphous silicon dioxide was 96.5 weight %. The yield of silicon dioxide was 29.5% of the source raw material in absolutely dry source raw material equivalent.

### Example 2

Bagasse in the amount of 146 g with a humidity of the source sample of 46% (100 g of dry sample) under pH = 2.5, at a temperature of 150 - 190°C (preferably, 180°C) was subjected to a three-time autoclave treatment, the duration of each treatment being 5 minutes. The HS/sample ratio and the protector/water ratio are similar to Example 1. The protector was a mixture of methyl-ethyl ketone and acetone with a ratio of 1:1. The treatment methods are similar to Example 1. The residue of the sample after autoclave hydrolysis was 18 g. The yield of sugars and lignin was 62 g and 18 g respectively (Table 1, item 2). The contents of volatile products is 2 g. The residue after hydrolysis is treated in a similar way to Example 1 and is fed to the zonal kiln afterwards to be burnt. Silicon dioxide obtained at T = 750°C contains < 0.02 weight% of total carbon. The yield of amorphous silicon dioxide was 96.1% (purity of silicon dioxide was 98%). The yield of silicon dioxide was 16.7% of the source raw material in absolutely dry source raw material equivalent.

### Example 3

A sample of wheat straw of 110 g with a humidity of 4.82% was placed in the autoclave and treated three times, the duration of each treatment being 4 minutes, at T = 190°C; pH = 1.6. The HS/sample ratio and the protector/water ratio is similar to Example 1. The protector was methyl-ethyl ketone. The treatment methods are similar to Example 1. The residue of the sample after hydrolysis was 18.2 g. The yield of sugars and lignin was 62.66 g and 20.2 g respectively (Table 1, item 3). The contents of volatile products is 3.64 g. After washing with acetone to remove the residues of lignin and with the aqueous solution of hydrochloric acid (1N) to reduce the total content of metal oxides in the residue up to 0.88 weight%, the hydrolysis residue was annealed in the zonal kiln at T = 750°C. The produced silicon dioxide contained < 0.02 weight% of total carbon and had a purity of 97%. The yield of amorphous silicon dioxide was 96.5% and 17.0% of the source raw material in absolutely dry source raw material equivalent.

### Example 4

A sample of wheat straw was subjected to a preliminary treatment by a 4% solution of NaOH at a temperature of 97 - 100°C for two hours ("alkaline pulping"). Afterwards, the sample was filtered from the solution, was washed in the filter with the residues of the alkaline solution being removed and was dried. Most of lignin and a part of hemicellulose is released from the sample of straw in such a treatment (the residue of lignin in straw may be about 11%). The residue of straw after treatment is 41.7% of the treated source sample on average. A quantity of pentose sugars can be extracted from the filtrates, if necessary.

The treated sample of straw (as described above) with a weight of 110 g with a humidity of 10% was placed in the autoclave, where it was treated three times (for 4 minutes each time) at T = 180°C; pH = 2.1; HS with a ratio of protector:water = 1:1 (the protector - methyl-ethyl ketone) and with a ratio of the sample:HS = 1:10. The combined hydrolyzates were placed in a "titrator" (as described above for the second embodiment of the process), pH was brought up to 10, and the solution was allowed to settle for a lignin precipitation to be formed.

Lignin was separated by filtering and dried (10 g). Methyl-ethyl ketone was removed from the filtrate by distillation in the waterjet pump vacuum after filtering. The yield of sugars was 64.2 g. The residue of the sample of straw after hydrolysis was 17.68 g, and the residue was 17.0 g after treating with a solvent and an acid aqueous solution (Table. 1, Item 4). In a similar manner to Examples 1 - 4, amorphous silicon dioxide with a yield of 98.8%, with the content of main substance of 98% and a yield of 17.0% of absolutely dry source raw material is produced in the zonal kiln.

### Example 5

A weighed portion of sawdust of coniferous trees in the amount of 100 g (on a dry sample basis) was subjected to a three-time treatment in the autoclave (for 6 minutes each time) at T = 170 - 190°C (preferably, 180°C), pH = 1.87 with a solution containing a mixture of acetone/water at a ratio of 4:1 when diluted in a similar way to the previous examples. The products of reaction were extracted according to the methods similar to Example 1. The yield of volatile products was 6.2 g.

The yield of monosaccharides was 35.6 g; that of lignin was 30 g. The conversion of the source sample reached 71.6% (Table 1, item 5). The residue (28.4 g) was treated in a similar way to the above examples before being burnt in the zonal kiln (750°C). The yield of amorphous silicon dioxide was 90%.

### Example 6

The weighed portion of rice husk of 97.1 g (on a dry sample basis) was treated in the autoclave in a similar way to the methods of Example 1. The yield of monosaccharides was 57.7% of the weight of the source material (56.03 g) in the event of conversion in the amount of 80% (Table 1, item 6). The yield of lignin was 14.6%, that of the related products was 7.7%. The residue after hydrolysis is 19.42 g (20%). The residue was treated in a similar way to the above examples before being burnt in the zonal kiln. The yield of amorphous silicon dioxide was 97.1% in the event of annealing in the zonal kiln at 600°C.

### Example 7

The weighed portion of rice husk of 100 g (on a dry sample basis) was treated in the autoclave in a similar way to the methods of Example 1. The yield of monosaccharides was 58.1% of the weight of the source material in the event of conversion in the amount of 81% (Table 1, item 7), the yield of the related products was 7.9%. The residue after hydrolysis was 19.0 g. The residue was treated in a similar way to the above examples before being burnt in the zonal kiln. The yield of amorphous silicon dioxide was 96.0% in the event of annealing in the zonal kiln at 750°C.

**Table 1**

| No. Item No. | Material type (dry weighed portion), g | Conversion (on a dry material basis),% | The yield of sugars, % | The yield of lignin,% | The yield of the related products,% | The residue after hydrolysis, % | The yield of amorphous SiO₂, % |
|---|---|---|---|---|---|---|---|
| | | | | | | | Temperature of roasting, °C |
| 1 | Primary residual sludge (100) | 68 | 32.5 | 28.6 | 6.9 | 32.0 | 96.5 |
| | | | | | | | 600 |
| 2 | Bagasse (100) | 82 | 62 | 18 | 2.0 | 18.0 | 96.1 |
| | | | | | | | 750 |
| 3 | Straw (104.7) | 82.6 | 59.7 | 19.2 | 3.7 | 17.4 | 96.5 |
| | | | | | | | 750 |
| 4 | Straw (99) | 82.1 | 64.9 | 10 | 7.2 | 17.9 | 98.8 |
| | | | | | | | 600 |
| 5 | Sawdust of coniferous trees (100) | 71.6 | 35.6 | 30 | 6.0 | 28.4 | 90.0 |
| | | | | | | | 750 |
| 6 | Rice husk (97.1) | 80.0 | 57.7 | 14.6 | 7.7 | 20.0 | 97.1 |
| | | | | | | | 600 |
| 7 | Rice husk (100) | 81 | 58.1 | 15.0 | 7.9 | 19 | 96.0 |
| | | | | | | | 750 |

The residual carbon content in silicon dioxide did not exceed 2% at a temperature of annealing the hydrolysis residue of 350°C and did not exceed 0.02% at the temperatures of 600°C and 750°C.

### Industrial Applicability

The method of the invention allows to produce silicon dioxide of high quality from various types of cellulose-containing materials, ranging from the waste of wood-processing industry and bagasse to primary residual sludge of the treatment facilities, that is, the method is sufficiently universally applicable.

In addition, not only a high yield of silicon dioxide, but also a high yield of fuel monosaccharides, which are easily fermented with yeast into alcohol, and of lignin as a valuable product for industry is reached. It allows to reduce the volume of released flue gases when performing a process of burning the hydrolysis residue, to practically use the heat of the latter in a technological process of hydrolysis and to significantly reduce the cost of silicon dioxide by producing industrially useful related products.

## Claims

1. A method of obtaining silicon dioxide from cellulose-containing material, including preliminary treatment of a source material by acid hydrolysis and subsequent isolation of silicon dioxide, **characterized in that** acid hydrolysis is carried out in a single step with 3 treatments 5 minutes each, at pH <5, temperature 140-240°C and elevated pressure in the presence of at least one protector of monosaccharides, protecting them from high temperatures and pressure, then lignin and monosaccharides are separated from the reaction products, namely the reaction products enter the distiller, where the protectors are separated, then the residue is fed to the filter, where the lignin is separated, and then the monosaccharides in the form of an aqueous solution of sugars are collected after neutralizing, the mineral residue after removal of the liquid phase is burned at a temperature of 350-750°C in a zone furnace to obtain amorphous silicon dioxide;
wherein, before feeding to the zone furnace for burning, the mineral residue containing silicon dioxide is treated with a solvent to remove the lignin residues to reduce the carbon content; and
before feeding to the zone furnace for burning, the mineral residue containing silicon dioxide is treated with 1N solution of hydrochloric acid to reduce the total content of metal oxides.

2. The method according to claim 1, wherein the acid hydrolysis is carried out at a temperature of 170-190°C.

3. The method according to claim 1 or claim 2, wherein the raw material is subjected to alkaline pulping before hydrolysis in the event of high content of lignin in the source raw material.

4. The method according to claim 1 or claim 2, wherein at least one of chemical compounds chosen from ketones or oxygen-containing heterocycles is used as a protector of monosaccharides.

5. The method according to any one of claims 1-4, wherein rice husk is used as a source raw material.

## Patentansprüche

1. Ein Verfahren zur Herstellung von Siliziumdioxid aus cellulosehaltigem Material, umfassend die Vorbehandlung des Ausgangsmaterials durch Säurehydrolyse und die anschließende Isolierung von Siliziumdioxid. Die Säurehydrolyse erfolgt einstufig mit drei Behandlungen von jeweils 5 Minuten bei einem pH-Wert < 5, einer Temperatur von 140-240 °C und erhöhtem Druck in Gegenwart mindestens eines Monosaccharid-Schutzmittels, das die Produkte vor den Auswirkungen hoher Temperaturen und des Drucks schützt. Anschließend werden Lignin und Monosaccharide von den Reaktionsprodukten getrennt. Die Reaktionsprodukte werden einem Destillator zugeführt, wo die Schutzmittel abgetrennt werden. Anschließend wird der Niederschlag einem Filter zugeführt, wo das Lignin abgetrennt wird. Anschließend werden die Monosaccharide nach der Neutralisation in Form einer wässrigen Zuckerlösung gesammelt. Der mineralische Rückstand wird nach Entfernung der flüssigen Phase bei einer Temperatur von 350-750 °C in einem Zonenofen kalziniert, um amorphes Siliziumdioxid zu erhalten. wobei der siliziumdioxidhaltige Mineralrückstand vor der Zufuhr in den Zonenröstofen mit einem Lösungsmittel behandelt wird, um restliches Lignin zu entfernen und so den Kohlenstoffgehalt zu reduzieren; und vor der Zufuhr in den Zonenröstofen mit einer 1N Salzsäurelösung behandelt wird, um den Gesamtgehalt an Metalloxiden zu reduzieren.

2. Verfahren nach Anspruch 1, wobei die Säurehydrolyse bei einer Temperatur von 170-190 °C durchgeführt wird.

3. Verfahren nach Anspruch 1 oder 2, wobei das Ausgangsmaterial bei hohem Ligningehalt vor der Hydrolyse einer alkalischen Kochung unterzogen wird.

4. Verfahren nach Anspruch 1 oder 2, wobei mindestens eine chemische Verbindung aus der Gruppe der Ketone oder sauerstoffhaltigen Heterocyclen als Monosaccharidschutz verwendet wird.

5. Verfahren nach einem der Ansprüche 1 bis 4, wobei Reishülsen als Ausgangsmaterial verwendet werden.

## Revendications

1. Procédé de production de dioxyde de silicium à partir d'un matériau cellulosique, comprenant le prétraitement du matériau de départ par hydrolyse acide, puis l'isolement du dioxyde de silicium. Ce procédé est **caractérisé en ce que** l'hydrolyse acide est réalisée en une seule étape, avec trois traitements de 5 minutes chacun, à un pH < 5, une température de 140 à 240 °C et une pression élevée, en présence d'au moins un monosaccharide protecteur qui les protège des effets des températures et pressions élevées. La lignine et les monosaccharides sont ensuite séparés des produits de réaction. Les produits de réaction sont introduits dans un distillateur où les protecteurs sont séparés. Le précipité est ensuite introduit dans un filtre où la lignine est séparée. Les monosaccharides sont ensuite recueillis sous forme de solution aqueuse de sucres après neutralisation. Le résidu minéral, après élimination de la phase liquide, est calciné à une température de 350 à 750 °C dans un four à zone pour obtenir du dioxyde de silicium amorphe. Dans lequel, avant d'être introduit dans le four de grillage de zone, le résidu minéral contenant du dioxyde de silicium est traité avec un solvant pour éliminer la lignine résiduelle et réduire la teneur en carbone ; et avant d'être introduit dans le four de grillage de zone, le résidu minéral contenant du dioxyde de silicium est traité avec une solution d'acide chlorhydrique 1 N pour réduire la teneur totale en oxydes métalliques.

2. Procédé selon la revendication 1, dans lequel l'hydrolyse acide est réalisée à une température de 170 à 190 °C.

3. Procédé selon la revendication 1 ou 2, dans lequel la charge est soumise à une cuisson alcaline avant l'hydrolyse en cas de teneur élevée en lignine.

4. Procédé selon la revendication 1 ou 2, dans lequel au moins un composé chimique choisi parmi les cétones ou les hétérocycles oxygénés est utilisé comme protecteur de monosaccharide.

5. Procédé selon l'une quelconque des revendications 1 à 4, dans lequel la balle de riz est utilisée comme charge.
